(19) Europäisches Patentamt
European Patent Office
Office européen des brevets

(11) Veröffentlichungsnummer: **0 256 433 A2**

(12) # EUROPÄISCHE PATENTANMELDUNG

(21) Anmeldenummer: 87111316.3

(51) Int. Cl.4: **C02F 3/08**

(22) Anmeldetag: 05.08.87

(30) Priorität: 12.08.86 DE 3627341

(43) Veröffentlichungstag der Anmeldung: 24.02.88 Patentblatt 88/08

(84) Benannte Vertragsstaaten: AT BE CH DE ES FR GB GR IT LI LU NL SE

(71) Anmelder: **Mecapec S.A.**
**Postfach**
**CH-8716 Schmerikon(CH)**

(72) Erfinder: **Boller, Markus, Dr.**
**Allmeindstrasse 28**
**CH-8104 Wallisellen(CH)**
Erfinder: **Gujer, Willi, Dr.**
**Bahnhofstrasse 22**
**CH-8153 Rümlang(CH)**

(74) Vertreter: **Vièl, Georg, Dipl.-Ing.**
**Am Zimmerplatz 16**
**D-6606 Saarbrücken-Gersweiler(DE)**

(54) **Verfahren zur biologischen Behandlung von Abwasser mit Hilfe einer kaskadenartigen Tauchtropfkörper-Anlage.**

(57) Verfahren zur biologischen Behandlung von Abwasser mit Hilfe einer Kaskaden-Tauchtropfkörper-Anlage

Die Patentanmeldung befaßt sich mit einem Verfahren zur biologischen Behandlung von Abwasser mit Hilfe einer auch für die Oxydation von Stickstoff-Verbindungen ausgelegten kaskadenartigen Tauchtropfkörper-Anlage.

Gemäß der Erfindung ist vorgesehen, daß die Fließrichtung des zu reinigenden Abwassers von Zeit zu Zeit umgekehrt wird.

Als wesentlicher Vorteil ergibt sich, daß die Vorzüge des längsdurchströmten Kaskaden-Tauchtropfkörper-Systems genutzt werden, ohne die aufgeführten Nachteile in Kauf nehmen zu müssen. Die Umkehr der Fließrichtung bewirkt, daß in allen Kassetten hohe Populations-Dichten stickstoff-oxydierender Bakterien erzielt werden. Bakterien, die sich während der einen Phase des Betriebes im Hungerzustand befinden, werden nach Änderung der Fließrichtung wieder ausreichend mit Substrat versorgt. Hohe Bakterien-Dichten auf allen Bewuchskörpern des Systems erlauben einerseits eine höhere Nitrifikationsleistung des Gesamtsystems und andererseits eine deutliche Verbesserung der Prozeß-Stabilität bei wechselnden Abwasserverhältnissen gegenüber der bekannten Verfahrensweise.

Fig. 3

Max. Nitrifikationsrate in g NH4-N/m2·d
2.0
1.5
1.0
0.5
0
ERFINDUNG
STAND DER TECHNIK
10 °C
0
1
2
3
4
5
6
7
Mittlere NH4-Belastung in g NH4-N/m2·d

EP 0 256 433 A2

# Verfahren zur biologischen Behandlung von Abwasser mit Hilfe einer kaskadenartigen Tauchtropfkörper-Anlage

Die Erfindung betrifft ein Verfahren zur biologischen Behandlung von Abwasser mit Hilfe einer für die Oxydation von Stickstoffverbindungen ausgelegten kaskadenartigen Tauchtropfkörper-Anlage.

Ein solches Verfahren ist beispielsweise durch die DE 31 17 805 A1 bekannt geworden. Ein wesentlicher Grund für eine solche Kaskaden-Anlage ist die Abhängigkeit der Enzymaktivität von der Substratkonzentration. Hohe Stoffwechsel-Geschwindigkeiten können nur dann erzielt werden, wenn dieSubstratkonzentration ausreichend groß ist. In einer Kaskaden-Anlage herrscht in den ersten Kassetten ein hohes Nährstoffangebot mit der Konsequenz hoher Reaktionsgechwindigkeiten. In der oder den in Fließrichtung letzten Kassetten liegt dagegen eine niedrige Substratkonzentration und eine entsprechend geringe Enzymaktivität vor. Insgesamt kann der Substratgradient über die Kaskaden-Anlage einen höheren Stoffumsatz und damit eine größere Reinigungsleistung bewirken, als dies bei einem volldurchmischten System der Fall ist, wo an jeder Stelle eine gleichniedrige Nährstoffkonzentration herrscht.

Bei der derzeit praktizierten Verfahrensweise von kaskadenartig angeordneten Tauchtropfkörpern kann von Nachteil sein, daß aufgrund der niedrigen Substrat-Konzentration in der oder den Letzten Kassetten und den damit verbundenen geringen Stoffumsätzen auch nur ein geringer Bakterienzuwachs erfolgt. Die Folge ist eine niedrige Bakterienkonzentration auf dem oder den letzten Bewuchskörpern, was vor allem zu einer unzureichenden Nitrifikationsrate führt.

Der Erfindung liegt die Aufgabe zugrunde, bei einem Verfahren der eingangs genannten Art die Nitrifikationsleistung zu erhöhen.

Diese Aufgabe wird dadurch gelöst, daß die Fließrichtung des die Tauchtropfkörper-Anlage passierenden Abwassers von Zeit zu Zeit umgekehrt wird.

Nach einer weiteren Ausbildung der Erfindung ist vorgesehen, daß die Fließrichtung periodisch umgekehrt wird.

Eine andere Ausbildung der Erfindung besteht darin, daß die Fließrichtung nur in einzelnen Kassetten der kaskadenartigen Tauchtropfkörper-Anlage umgekehrt wird.

Schließlich kann auch vorgesehen sein, daß die Fließrichtung in den am Ende der kaskadenartigen Tauchtropfkörper-Anlage angeordneten Kassetten umgekehrt wird.

Die mit der Erfindung erzielten Vorteile bestehen insbesondere darin, daß die Vorzüge des längsdurchströmten Kaskaden-Tauchtropfkörper-Systems genutzt werden können, ohne die aufgeführten Nachteile in Kauf nehmen zu müssen. Die Umkehr der Fließrichtung bewirkt, daß in allen Kassetten hohe Populationsdichten stickstof-oxydierender Bakterien erzielt werden. Bakterien, die sich während der einen Phase des Betriebes im Hungerzustand befinden, werden nach Änderung der Fließrichtung wieder ausreichend mit Substrat versorgt. Hohe Bakteriendichten auf allen Bewuchskörpern des Systems erlauben einerseits eine höhere Nitrifikationsleistung des Gesamtsystems und andererseits eine deutliche Verbesserung der Prozeßstabilität bei wechselnden Abwasserverhältnissen gegenüber der bekannten Verfahrensweise.

Die Erfindung wird anhand der Zeichnungen näher erläutert.

Es zeigt schematisch

Fig. 1 und

Fig. 2 verschiedene Möglichkeiten der Umkehr der Fließrichtung und

Fig. 3 veranschaulicht den Vorteil des neuen Verfahrens gegenüber dem Stand der Technik.

Die Abwasser-Konzentration und die Schmutz-Frachten im Zulauf zur Kläranlage, unter anderem auch Stickstoff-Konzentrationen und -Frachten, sind erheblichen zeitlichen Änderungen unterworfen. Die geringe Bakterien-Dichte in den letzten Kassetten eines kaskadenartig durchströmten Systems gestattet es aber nur in begrenztem Maß, den Stoffumsatz den wechselnden Verhältnissen anzupassen.

Der Kern der Erfindung ist die Umkehr der Fließrichtung in einer kaskadenartig ausgebildeten Tauchtropfkörper-Anlage. Dazu kann sowohl die Fließrichtung im Gesamt-System als auch die Durchströmung in einzelnen Kassetten verändert werden.

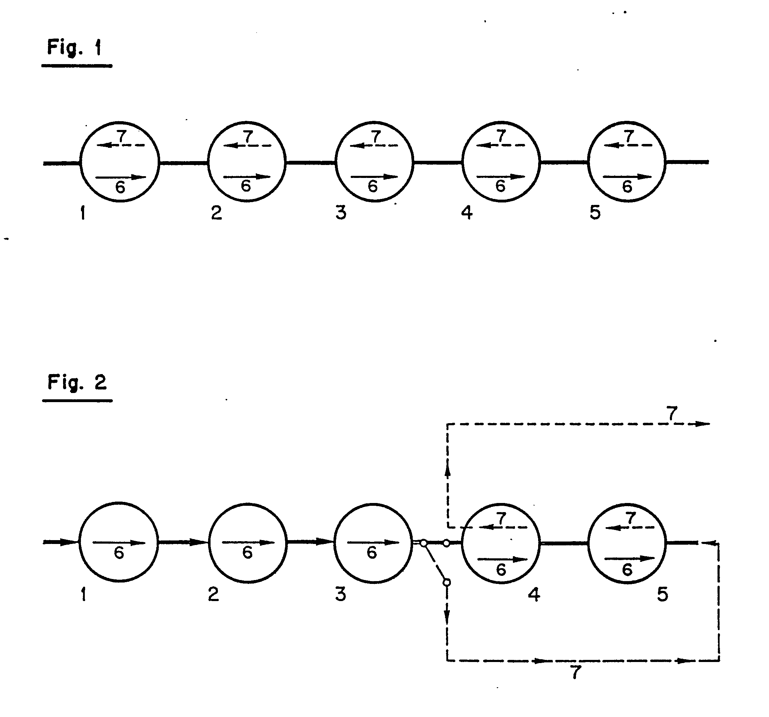

Fig. 1 zeigt das Fließschema einer aus fünf Stufen bestehenden kaskadenartigen Tauchtropfkörper-Anlage. In der Phase A fließt das zu behandelnde Abwasser in Richtung der Pfeile 6 durch die Kassetten 1 bis 5. In der zeitlich versetzten Phase B fließt das zu reinigende Abwasser in umgekehrter Richtung (Pfeile 7). Das bedeutet, in einem im anlagenbetrieb zu optimierenden zeitlichen Rhytmus werden gemäß Fig. 1 der Zu-und Ablauf zu der Kaskaden-Tauchtropfkörper-Anlage vertauscht.

Dadurch werden die Kassetten, in denen in Phase A niedrige Abwasser-Konzentrationen herrschten, z.B. die Kassetten 4 und 5, in Phase B wieder mit ausreichend hohem Substrat-Angebot versorgt. Dasselbe gilt später für die Kassetten 1 und 2, wenn wieder auf Phase A geschaltet wird.

Der Wechsel von Phase A zu Phase B kann periodisch vorgenommen werden, wenn die Kläranlage verhältnismäßig gleichmäßig belastet ist. Die Steuerung kann aber auch entsprechend der jeweiligen Belastung erfolgen, was für Stoßbetrieb zeckmäßig ist.

Bei dem in Fig. 2 dargestellten Beispiel bezieht sich die Umkehr der Fließrichtung nur auf die Kassetten, bei denen sich die Substrat-Limitierung auszuwirken beginnt. Die Entscheidung, ab welcher Kassette die Durchströmungsrichtung zu verändern ist, muß entsprechend den jeweils erwartenden Abwasserverhältnissen getroffen werden. In Fig. 2 wird die Fließrichtung in den beiden letzten Kassetten 4 und 5 geändert. Das heißt, in Phase A fließt das zu behandelnde Abwasser wieder in Richtung der Pfeile 6. In Phase B bleibt die Fließrichtung in den Kassetten 1 bis 3 erhalten (Pfeile 6). Nach der Kassette 3 wird das Abwasser umgeleitet und in Richtung der Pfeile 7 in umgekehrter Richtung durch die Kassetten 4 und 5 geleitet. Der Abfluß des gereinigten Abwassers ist in diesem Fall - wie dargestellt - nach der Kassette 4.

In den Beispielen gemäß den Fig. 1 und 2 sind jeweils 5 Kassetten vorgesehen. Die Erfindung ist auf diese Ausführungsbeispiele nicht beschränkt; bei zwei oder mehr Kassetten kann das neue Verfahren mit Erfolg angewandt werden.

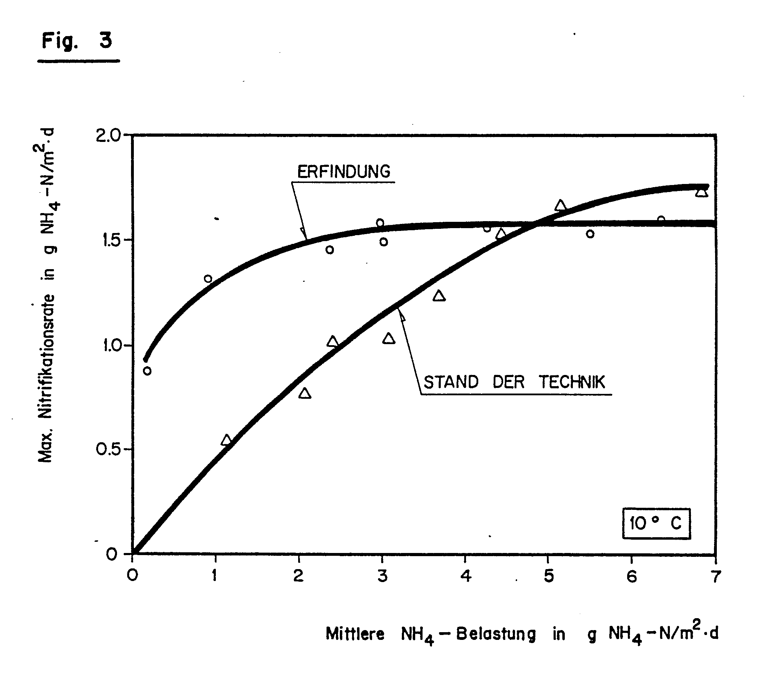

Das neue Verfahren arbeitet mit wesentlich besseren Ergebnissen als Verfahren mit immer gleichbleibender Fließrichtung. Das zeigt deutlich Fig. 3.

Hier ist die mittlere Ammoniumflächenbelastung der maximalen Nitrifikationsrate gegenübergestellt. Es wird ersichtlich, daß höhere Stoffumsatzgeschwindigkeiten bei niedrigeren Belastungen erzielt werden. Daraus ergibt sich die Konsequenz, daß gegenüber herkömmlichen Verfahren mit der erfindungsgemäßen Verfahrenstechnik bei gleichen Flächenangeboten bessere Ablaufqualitäten erzielt werden oder bei Vorgabe einer bestimmten Reinigungsleistung kleinere Reaktoren verwendet werden können.

**Ansprüche**

1. Verfahren zur biologischen Behandlung von Abwasser mit Hilfe einer für die Oxydation von Stickstoffverbindungungen ausgelegten kaskadenartigen Tauchtropfkörper-Anlage, dadurch **gekennzeichnet,** daß die Fließrichtung des die Tauchtropfkörper-Anlage passierenden Abwassers von Zeit zu Zeit umgekehrt wird.

2. Verfahren nach Anspruch 1, dadurch **gekennzeichnet,** daß die Fließrichtung periodisch umgekehrt wird.

3. Verfahren nach Anspruch 1 oder 2, dadurch **gekennzeichnet,** daß die Fließrichtung nur in einzelnen Kassetten der kaskadenartigen Tauchtropfkörper-anlage umgekehrt wird.

4. Verfahren nach Anspruch 3, dadurch **gekennzeichnet,** daß die Fließrichtung in den am Ende der kaskadenartigen Tauchtropfkörper-Anlage angeordneten Kassetten umgekehrt wird.

Fig. 1

7
7
7
7
7
6
6
6
6
6
1
2
3
4
5

Fig. 2

7
6
6
6
7
7
6
6
1
2
3
4
5
7

Fig. 3

ERFINDUNG
STAND DER TECHNIK
10 ° C
2.0
1.5
1.0
0.5
0
0
1
2
3
4
5
6
7
Max. Nitrifikationsrate in g NH4 -N/m2·d
Mittlere NH4 – Belastung in g NH4 -N/m2·d